Europäisches Patentamt

(19) European Patent Office

Office européen des brevets

(11) Publication number: **0 072 213**
**B1**

(12) **EUROPEAN PATENT SPECIFICATION**

(45) Date of publication of patent specification: **20.02.85**

(51) Int. Cl.⁴: **C 09 K 17/00, C 05 G 3/04**

(21) Application number: **82304144.7**

(22) Date of filing: **05.08.82**

(54) **Particulate compositions useful as plant growing media additives.**

(30) Priority: **07.08.81 GB 8124256**

(43) Date of publication of application:
**16.02.83 Bulletin 83/07**

(45) Publication of the grant of the patent:
**20.02.85 Bulletin 85/08**

(84) Designated Contracting States:
**AT BE CH DE FR IT LI LU NL SE**

(56) References cited:
**EP-A-0 023 347
GB-A-1 591 415
US-A-2 856 380
US-A-3 437 625
US-A-3 557 562
US-A-3 857 991**

(73) Proprietor: **UNILEVER NV
Burgemeester s'Jacobplein 1 P.O. Box 760
NL-3000 DK Rotterdam (NL)**

(72) Inventor: **Bosley, John Anthony
10 Philip Way Higham Ferrers
Wellingborough Northamptonshire (GB)**
Inventor: **Dehnel, Roger Brian
3 Laurence Court Dean Street
Marlow Buckinghamshire (GB)**
Inventor: **Symien, Serge Alfred
79 Queen's Drive
Bedford (GB)**

(74) Representative: **Wiesenhaan, Herman, Drs. et al
Unilever N.V. Patent Division P.O.Box 137
NL-3130 AC Vlaardingen (NL)**

# 0 072 213

**Description**

This invention relates to particulate compositions useful as plant-growing media additives comprising partially hydrated, water-retentive gel particles with a modified outer surface.

Various forms of hydrogels ("superabsorbents") have been tested as, or at least proposed for use as, growing media additives, often referred to as soil conditioners, hydromulches and soil-water retainers. Such additives can be used to improve the properties, such as water retention, of conventional plant-growing media, for example soil, peat, sand, loam, compost and sawdust. Alternatively, they can be used in conjunction with aqueous plant nutrient solutions to provide water retention and root support. An extensive review of the relevant literature is given by R.A.I. Azzam, in *Commun. Soil Science and Plant Analysis*, 11(8), 767—834, (1980). It has, however, been difficult to achieve the preparation of a product which has an adequately high degree of water uptake without adversely affecting soil properties such as aeration when the product is incorporated in soil to give it a higher water-holding capacity.

However, the admixing of these products with damp or wet soil caused problems and therefore it has been recommended in GB—A—1 591 415, in particular page 8, lines 59—61, and page 9, lines 28—29, to modify the outer surface of these gel particles by treatment with i.a. silica materials which had been rendered hydrophobic by treatment with an organosilicon compound, such as an organohalosilane (cf. also US—A 3 710 510).

However, products thus treated do not hydrate readily and they often contain cloggin fines and can easily generate further fines on handling.

By the invention we provide a particulate composition useful as a plant-growing media additive of which the gel particles are capable of absorbing releasably at least 5 and preferably at least 10 times their own weight of water, are substantially water-insoluble and have a low deformability when fully hydrated, and which particles have been rendered free-flowing by having the outside surface modified with a finely particulate hydrophilic flow agent of the group consisting of kaolin, fuller's earth, talc, bentonite and aluminium silicate.

The invention further provides a process for the preparation of such a composition, in which process a partially hydrated mass of water-retentive gel is subdivided into particles in the presence of such a finely particulate flow agent.

The gel particles are preferably rather coarse, i.e. at least 0.5 mm, preferably 1 mm or more typical particle size at 50—60% solids content (i.e. with the partially hydrated gel containing 50—40% by weight water). The flow agent should be very much finer. The flow agent used is hydrophilic, so that it does not hinder water uptake by the gel particles. Kaolin and fuller's earth are particularly preferred flow agents. Preferably the flow agent is not affected by water contained in the gel, and preferably is non-hygroscopic. The gel particles are preferably free of significant amounts of water-soluble or -swellable fines which could cause formation of a gluey product on further hydration or cause potential dust problems for users. For example, one desirable composition provided by the invention comprises no more than 3% by weight of gel particles finer than 0.5 mm, and substantially no gel particles smaller than 0.25 mm. Using the techniques described herein, polymer fines in the 60—100 micron range can be avoided entirely, thus avoiding the need for sieving. This can preferably be achieved, in carrying out the invention, by avoiding milling the gel particles in the dry state.

Preferably, much if not all of the flow agent is adherent to the surface of the gel particles. Indeed, in the ideal situation the flow agent forms an at least substantially continuous coating on all of the gel particles. Preferably, however, there should be little or no excess of flow agent present, as this could lead to dusting problems. The optimum level of flow agent present will clearly depend on the particle size of the gel, which determines the total surface area of the gel. In general, at least about 3%, and preferably at least about 5%, by weight of the flow agent will be required. The amount of the flow agent required is unlikely to exceed about 20% by weight, and an optimum level will typically be about 10%. These percentages are expressed by weight of the partially-hydrated gel product. Preferably the flow agent is added when the gel has a water content greater than about 16%, and more preferably greater than about 20% by weight, when it has a somewhat sticky surface, for example during comminution. For this purpose the water content of the gel should not exceed about 80% by weight, and need not in general exceed about 70% by weight, and an ideal level will generally lie in the range 30 to 60% by weight. The expression "partially-hydrated", as used in this specification in relation to the gel particles of the invention, implies water levels of roughly this order of magnitude, but it will be appreciated that different types of gels and flow agents may enable a partially-hydrated yet suitably free-flowing product to be made having a water content of greater than 70% by weight. To reduce the costs of handling and transport, preferably the partially-hydrated product should not contain more water than is necessary to achieve the benefits of the invention in this respect.

We find that such a product can be made with high water-retentive capacity without substantially hindering soil aeration or other agriculturally significant soil properties e.g. gas-exchange facility, friability, drainage and percolation properties, when the product is incorporated as a conditioning water-holding agent. Indeed, it is an advantage of the partially-hydrated product of the invention that it can significantly improve soil aeration under many circumstances, in contrast to many other forms of

2

**0 072 213**

"superabsorbent" gel products previously tested for agricultural and horticultural purposes, which have tended to lead to rather water-logged conditions.

To be of value in agriculture/horticulture as a water-retentive additive, any gel product should be capable of absorbing releasably at least 5, and preferably at least 10, times its own weight of water. Not merely can the gel products of the invention achieve this, but we have been able to produce free-flowing partially-hydrated particulate gels capable of absorbing at least 15, generally at least 20, and often at least 25, times their dry weight of water without significantly interfering with essential soil properties. Indeed, some gel products of the invention are capable of releasably absorbing 100 times, or more, their dry weight of water. It will be appreciated that a typical partially-hydrated product of the invention already contains about 40% by weight of water. It will also be appreciated that absorption figures for "pure" water may not be particularly significant, because the presence of even minute traces of ionised solutes can markedly affect the water-absorbing properties of gel polymers. Hence it is to be expected that any gel product will actually absorb substantially less of an aqueous plant nutrient solution, and so in practice their true absorbency is lower. However, in general, the gel products of the invention are capable of absorbing from 10 to 70 times their dry weight of typical aqueous plant nutrient solution.

The manufacture of products of the invention can be relatively simple and convenient because a drying stage is not necessary: the gels can often be made with a water content equivalent to that of the final products.

Because their water content is at or near equilibrium, storage of the partially-hydrated gel products of the invention is facilitated, and they do not generally require sophisticated packaging to protect them from atmospheric moisture.

The products can be easily mixed with water or water-containing material, such as damp compost, without specially vigorous mixing, as is often required with fully dehydrated materials.

Even better aeration can often be achieved by products in which, as in a preferred embodiment, the partially hydrated gel composition has a foam structure preferably with a foam content equivalent to a volume increase of up to 100% or more, e.g. up to about 300%.

The invention is not limited to any restricted class or classes of water-absorbing and desorbing gel materials, and hence the invention can be beneficially applied to any of the superabsorbent gel types that have previously been used, in an agricultural/horticultural context. A wide variety of polymeric materials have been used to prepare superabsorbent gels, and these are reviewed, for example, in UK patent application No. 2,083,487A. Potentially, any hydrophylic water-swellable polymeric material can be used, as long as it is at least substantially water-insoluble. The polymer must have at least some ionic character to enable it to absorb sufficient quantities of water. Some degree of cross-linking is generally essential to ensure low solubility. Examples of general classes of suitable polymers are polyacrylates, i.e. polymers and copolymers of acrylamide, acrylic acid, acrylic acid salts, acrylic esters and acrylonitrile; polysaccharide graft copolymers, i.e. starches and celluloses combined with polyacrylate chains, for example gelatinised starch-hydrolysed polyacrylonitrile graft copolymers; and cross-linked alkyl celluloses, such as carboxymethylcellulose cross-linked with epichlorohydrin. Any monomer can contain non-sterically-hindering substituents, e.g. methyl.

The gel product should have low deformability when fully hydrated, so that good soil aeration is maintained when it is added to or worked into soil and hydrated. Preferably the gel material is not significantly degradable, so that it retains its effect for a long time in a natural environment.

One very suitable example of such a polymeric material is a copolymer of acrylamide and acrylic acid salt cross-linked by inclusion of a minor proportion of a bifunctional cross-linking agent, preferably N,N'-methylene-bisacrylamide. In a particularly preferred embodiment of the invention, the gel is a cross-linked copolymer of acrylamide and acrylic acid salt, in a molar ratio of at least 70:30 but not greater than 95:5. Again, the preferred cross-linking agent is N,N'-methylene-bisacrylamide. Preferably the molar ratio of acrylamide to acrylic acid salt is at least 80:20 but preferably is not greater than 90:10. Methacrylates can be used.

The polymerisation and cross-linking conditions are preferably such as would (in the absence of cross-linking) yield substantially water-soluble high molecular weight polymer, but includes enough cross-linking agent to reduce the amount of water-soluble polymer (which could lead to undesirable "glue" formation on hydration) to tolerable low levels, preferably less than 30% by weight of the dry polymer of the particulate compositions (i.e. less than about 20% of the partially-hydrated product). The level of cross-linking agent required will vary according to the types of monomers and cross-linking agent used, but generally the level of cross-linking agent will not need to be greater than 2%, and usually not greater than 1%, by weight of the total monomers. Usually the cross-linking agent will be present in an amount of at least 0.01% by weight of the total monomers. For the preferred acrylamide/acrylate copolymers used in the gel products of the invention, an ideal level of cross-linking agent will generally lie in the range 0.02 to 0.2% by weight of the total monomers. Examples of suitable cross-linking agents are ethylene glycol dimethacrylate, polyethylene glycol dimethacrylate, polyethylene glycol diacrylate, and most preferably 1,3,5-triacrylol-hexahydro-S-triazine and N,N'-methylene-bisacrylamide. Mixtures of two or more cross-linking agents can be used if desired. The proportion of soluble material in the dry polymer can conveniently be regarded for present purposes as

3

equal to the proportion by weight which becomes non-sedimenting and ultrafiltrable after agitation of particulate (uniformly ground through 1.5 mm screen) polymer in 1% NaCl solution at room temperature for $2\frac{1}{2}$ hours. This test can also be applied to the partially-hydrated product, with the omission of the grinding step.

It is preferred that the residual monomer in the polymer gel be not more than 1%, more preferably below 0.1%, most preferably below 0.05%. The special need for low monomer levels is due to the risk of toxicity to plants and users, and the levels which are acceptable can be checked according to the nature of the monomer with this need in mind. This can be achieved for example either by ensuring complete enough polymerisation, and/or by heating the polymer to remove residual monomer, and/or by solvent-washing. For example, residual acrylamide monomer can be removed by heating in the range 90°C—150°C for a sufficient time.

Preferably a monomer solution is polymerised by conventional UV photoinitiation using any suitable initiator, such as a benzoin alkyl ether. The total monomer level will generally be at least about 20%, and preferably at least 25%, by weight of the solution. An upper limit will depend on the solubility of the monomers used and the viscosity of the solution, especially if a thin-film process is being performed. For acrylic monomers a solution concentration of up to about 55% by weight are very suitable, and an ideal concentration will generally lie in the range 30—50%. The initiation level can be varied over wide limits, e.g. 0.001 to 1% of the monomer, but for benzoin methyl ether, for example, about 0.1% of monomer weight is very suitable. Polymerisation conditions can be chosen to ensure autoacceleration by reaction heat to give short reaction times without causing excessive overheating.

Acrylic acid monomer units can conveniently be present as the potassium, sodium or ammonium salt or the salt of any other acceptable convenient counterion. When acrylic acid is used as a monomer it can be partly (e.g. 90%) neutralised by alkali (e.g. $K_2CO_3$) before the polymerisation reaction.

As mentioned above, according to a preferred feature of the invention, the polymer gel is in the form of a foam. Foaming can be produced for example by saturating the reactant solution with a dissolved gas, and ensuring that the polymerisation conditions such that the exothermic polymerisation reaction causes a temperature rise sufficient to drive the gas reaction mixture to boil, after the reaction mix has become viscous, but before gelling is complete. In this way a bubble-containing polymer gel product is formed. As an example, a $CO_2$-effervescing system can be provided by saturating the reactant mix with a carbon dioxide, and/or using a carbonate to neutralise a monomer such as acrylic acid.

Foaming can be enhanced by the inclusion of a foaming agent (e.g. emulsifier, detergent) to the reactant mix prior to polymerisation, and this leads to particularly useful low-density cellular gel structures in the final product. A very wide selection of foaming agents can be used, the only likely restrictions being that the agent should not render the reactant solution opaque to UV light, should not have a harmful effect on plants if it were to be leached from the gel during use, and relative cost (although the level of foaming agent employed would in any event be very low). Preferably the quantity of foaming agent added to the reactant mix should be just sufficient to give the desired degree of foaming during the polymerisation, but this quantity will clearly vary from one agent to another. Very generally, it can be said that the quantity needed will lie in the range 0.01 to 0.1 gm/litre of reactant solution. Examples of suitable foaming agent that we have found to be effective are soaps, such as sodium stearate, and emulsifiers, such as sodium stearoyl-2-lactylate. Examples of other commercially-available foaming agents are hydrolysed proteins, such as "Hyfoama DS"* (Food Industries NV) and glycerol esters, such as "Emulsponge 2002" (PPF International).

Foamed products made in this way are especially advantageous in that they possess a "two-stage" water-holding capacity, by virtue of water taken into cells formed by the effervescence and water physically absorbed in the microporous polymer gel structure itself. They also can show increased water uptake rate, because of their greater surface-to-volume ratio.

Particulate gel compositions according to embodiments of the invention can conveniently be made by dividing a partially-hydrated water-absorptive polymer gel mass, e.g. made as described above, using a knife mill, or other suitable comminution device which has a shearing/cutting action at a relatively slow speed, e.g. about 500 r.p.m. A device having a rotary-bladed scissors-type shearing/cutting action is preferred, and a good example is the "Blackfriars" (TM) cutter.

The presence of a flow aid is important here to prevent cut gel pieces from adhering to each other and to the comminution device. As fines are to be avoided if possible, average particle sizes preferably are of the order of 0.5 to 5 mm, and preferably substantially no particles of gel are below 125 microns. The size of the particles is given as for the partially-hydrated condition, as the particles generally increase in size on hydration. We find that this method of comminution of a partially-hydrated material using a knife or cutting mill helps to avoid any need to sieve the gel product.

According to the invention, the particulate gel compositions so produced can be added to soil to improve its water-holding ability, or to give water-retentive layers, mulches and packaging for use in horticulture and agriculture. It will be appreciated that the gel composition itself will not provide any nutrients to sustain plants, and it must therefore be regarded primarily as a moisture-retentive and

* Trademark.

4

**0 072 213**

physically-supportive material. When used in combination with an aqueous nutrient solution (containing e.g. phosphates, nitrates, plant hormones and growth regulants) and/or one or more traditional plant growing media, such as peat, loam, compost or moss, the whole provides a very suitable material in which plants can germinate, root or grow. The gel compositions of the invention are particularly well suited for use in the potting or rooting of immature plants in a nursery prior to transfer to field or plantation conditions, and as such can be mixed in minor proportion with a rooting (root-holding) medium such as wood fibre, peat, forest bark, straw, loam, or particulate plastics material.

The proportion of gel product used can be varied according to the situation. When employed as a soil additive, levels of inclusion as low as 0.5—1% by weight of gel/volume of growing medium (assessed in terms of the partially-hydrated gel product) can lead to significant soil improvements. In this context generally only a few percent of the gel are required, and levels in excess of 4% by weight may not be considered economic. However, in a small-scale potting or rooting procedure the gel can be used simply in conjunction with an aqueous nutrient solution and the gel therefore represents 100% of the solids present, although in this context it will generally be sensible on cost grounds to mix the gel with one or more cheaper supportive fillers such as sawdust, straw or sand.

The invention is illustrated without limiting its scope, by the several features of the following Examples.

Example 1

Preparation of a flowable particulate composition suitable for agricultural or horticultural use.

Acrylic acid (950 g) containing methylenebisacrylamide (10 g) was neutralised either with potassium hydroxide (700 g) or potassium carbonate (863 g) as a solution in water (1250 ml). The temperature of the mixture was kept below 30°C during the neutralisation. Benzoin methyl ether (1.0 g) was dissolved in acrylic acid (50 g) and this solution was added to the mixture. The solution was shielded as much as possible from light. The whole was purged with nitrogen.

The reactant mix was then pumped to give a film (film thickness varied from 3—10 mm) on a moving conveyor shaped by the action of folding cheeks and a suction box to give a trough shape configuration which contained the liquid reactants. The conveyor then carried the solution through a nitrogen filled cavity where it was irradiated with long wave-length UV light ($2 \times 40$ watt tubes peaking at 365 nm, giving 3200 $\mu W/cm^2$ incident light intensity). The solution rapidly gelled to give a rubbery polymer. The irradiation time was typically in the range 6—9 minutes.

The partially hydrated gel was minced in a continuous process in a "Blackfriars" (TM) cutter with the addition of at least 5% by weight fine-particle-size (40—60 $\mu$m) kaolin, fuller's earth or bentonite, to give a chip product in which 97% of the particles had a particle size greater than 0.6 mm and less than 2 mm, and substantially no fines. The product had a moisture content about 40% by total weight, a bulk density of about 0.6 g/ml, and a proportion of soluble polymer (by reference to the total dry polymer) of 22%, when measured as described above. The product could be dried but should not be milled when dry, to avoid making fines. The product absorbed about 20 times its own weight of a conventional aqueous phosphate-containing plant nutrient solution.

The product was suitable for use in a mulch, as a soil additive or in a mixture with non-soil components, e.g. straw or peat, for covering or enclosing plant root systems.

Example 2 (Foamed gel crumbs)

Acrylic acid (950 g) containing methylenebisacrylamide (10 g) was (c. 90 mole %) neutralised by addition of potassium carbonate (862 g) as a solution in water (1200 g). The temperature of the mixture during the neutralisation process was maintained at 20°C or less. Benzoin methyl ether (1 g) in acrylic acid (50 g) was added to the neutralised acrylic acid solution followed by a thermal initiator 2,2'-azobis(2-amidinopropane) hydrochloride (1 g) as a solution in water (50 g). The reactant mix was shielded as much as possible from light.

The solution was poured into a glass dish to give a film thickness of between 5 and 7 mm and was irradiated by long wave length ultra-violet light (peak wavelength 365 nm, incident light intensity 3200 $\mu W/cm^2$). Polymerisation was rapid and accompanied by a rapid temperature rise, the temperature reaching a maximum of approximately 115°C after 2—3 minutes. There was a sudden and large increase in the volume of the polymer, due both to the boiling point of the aqueous mixture being exceeded and to the release of carbon dioxide from solution. This resulted in a highly foamed rubbery polymer. The total irradiation time was 8 minutes.

After cooling the foamed polymer was removed from the glass tray and comminuted in a "Blackfriars" (TM) cutter with the addition of at least 5% by weight fine particle size (40—60 $\mu$m) fuller's earth, kaolin or bentonite to give a crumb product where 97% of particles lay in the size range 0.6—2.0 mm and with substantially no fines. The moisture content of the product was 36%, the bulk density about 0.5 g/ml and the proportion of soluble polymer when measured as described above up to about 30% (of the dry solids, or about 20% by weight of the partially-hydrated product). The partially-hydrated product was able to absorb about 17 times its own weight of a conventional aqueous phosphate-containing plant nutrient solution.

5

Example 3 (Polyacrylamide copolymer)

Acrylic acid (48.7 g) containing benzoin methyl ether (0.24 g) was completely neutralised with potassium carbonate (47.3 g) as a solution in water (120 mls). To this mixture acrylamide (192 g) and N,N'-methylene-bisacrylamide (0.24 g), as a solution in water (240 mls), was added. The solution was shielded from light as much as possible and purged with nitrogen for 10 minutes.

The reactant mix was poured into pyrex* glass dishes so as to give a film thickness of approximately 7.5 mm and irradiated with long wave length ultra-violet light (2×40 watt tubes peaking at 365 nm giving an incident light intensity of 4000 $\mu$W/cm$^2$). The solution rapidly gelled to give a rubbery polymer accompanied by a rapid temperature rise, typically from 20°C to 100°C in $1\frac{1}{2}$ minutes. The total irradiation time was typically 5—10 minutes. The resulting material was not foamed.

The rubbery polymer film was removed from the glass dishes and is comminuted in a "Blackfriars"* (TM) cutter with the addition of at least 5% by weight fine particle size (40—60 $\mu$m) cutting aid such as fuller's earth, kaolin or bentonite to give a chip product where 97% of particles lay in the range 0.6—2.0 mm and with substantially no fines. The moisture content of the product was about 43%, the bulk density about 0.7 g/ml and the proportion of soluble polymer when measured as described above was about 13% (of the dry solids, or about 9% by weight of the partially hydrated product). The partially-hydrated product could absorb about 27 times its own weight of a conventional aqueous phosphate-containing plant nutrient solution.

Example 4

To a solution of acrylamide (1800 g) in water (1950 mls) was added potassium carbonate (195.5 g) in water (500 mls). To this mixture acrylic acid (204 g) containing benzoin methyl ether (2 g) and N,N'-methylene-bisacrylamide (1 g) is slowly added with stirring to complete the neutralisation reaction. The solution was shielded from light as much as possible and purged with nitrogen to flush out carbon dioxide from the carbonate neutralisation.

The reactant mix was then pumped to give a film thickness of 5—9 mm on a moving conveyor shaped by the action of folding cheeks and a suction box to give a trough shape configuration which contained the liquid reactants. The conveyor carried the solution through a nitrogen-filled cavity where it was irradiated with long wavelength UV light (2×40 watt tubes peaking at 365 nm, giving 3500±200 $\mu$W/cm$^2$ incident light intensity).

Polymerisation was rapid and accompanied by a rapid temperature rise, reaching in excess of 100°C after 2—3 minutes. Some large bubbles were formed in the polymer film due to the boiling point of water being exceeded, but the material is not foamed. The total irradiation time was in excess of 20 minutes.

The rubbery polymer film was cooled and comminuted on a "Blackfriars" (TM) cutter with the addition of 5% by weight of fine particle size cutting aid (fuller's earth). The moisture content of the product was 41%, the bulk density 0.6 g/ml and the soluble fraction of the partially-hydrated product was 6% (equivalent to about 9% by weight of the dry polymer). The product absorbed about 20 times its own weight of a plant nutrient solution.

Example 5

The procedure of Example 4 was repeated, using identical materials, quantities and reaction conditions, except that a dispersion of "Emulsponge 2002" (a commercially-available foaming agent obtained from PPF International) was added to the reactant mix and the nitrogen purging was omitted. The dispersion contained 1 g of foaming agent in 50 ml water.

During the polymerisation reaction there was a sudden and large increase in the volume of the polymer, due both to the boiling of the aqueous mixture and to the release of carbon dioxide from solution. The formation of a foamed gel was greatly enhanced by the addition of the foaming agent.

The foamed polymer film was cooled and comminuted on a "Blackfriars" (TM) cutter with the addition of 5% by weight of fine particle cutting aid (kaolin). The moisture content of the product was 41%, the bulk density 0.5 g/ml and the soluble fraction of the partially-hydrated product was 7% (equivalent to about 11% by weight of the dry polymer). The product absorbed about 25 times its own weight of a plant nutrient solution.

All the products described in Examples 1 to 5, had a non-powdery look and feel, and a friable, granular, although soft, texture to the touch, and were well compatible with soil and other plant growing media.

Example 6

The partially-hydrated gel product of Example 4 was used in plant growing trials as follows:

The gel product was used in conjunction with three separate growing media, sphagnum peat, coarse sand and good loam, each supplemented by a commercially-available controlled-release fertiliser. The trials were conducted in plastics plant pots each having a top diameter of 14 cm and a depth of 9 cm, packed with 600 cc of growing media. The gel product was included at levels of 0.5, 1.0

* Trademark.

**0072213**

and 2.0% wt/vol, and each growing media without any gel was used as a control. There were four pots of each combination, giving a total of 48 pots. Each pot contained 0.84 gm of the controlled-release fertiliser "Osmocote". The prepared pots were filled with water and drained for 24 hours prior to seed sowing.

To ensure uniformity of plant material, *Phaseolus vulgaris* seeds of the cultivar PROVIDER were chitted and sown five to a pot. The plants were grown for the five weeks under glass until the formation of the first flower buds, at which time plant height, number of flowering nodes and dry weight of the aerial portion were recorded. Watering throughout the growing period was by means of capillary matting. The results are given in Table 1, and indicate that the addition of the gel induced increases in plant height and number of nodes, and statistically significant increases in dry weight, in all media.

TABLE 1
Influence of gel on the growth of *P. vulgaris*
in three growing media

| Medium | Gel (% wt/vol) | Plant height (cm) | Flowering nodes | Dry weight (gm) |
|---|---|---|---|---|
| Sand | — | 25 | 1 | 3.812 |
|  | 0.5 | 26 | 2 | 5.152 |
|  | 1.0 | 26 | 2 | 4.112 |
|  | 2.0 | 30 | 2 | 4.890 |
| Peat | — | 36 | 2 | 8.497 |
|  | 0.5 | 42 | 3 | 9.170 |
|  | 1.0 | 47 | 3 | 10.060 |
|  | 2.0 | 47 | 3 | 10.062 |
| Loam | — | 37 | 1—2 | 4.785 |
|  | 0.5 | 40 | 2 | 6.125 |
|  | 1.0 | 43 | 3 | 7.185 |
|  | 2.0 | 40 | 2 | 6.897 |
| Sig. difference (P: 0.05) | | | | 0.968 |

Example 7
The use of gel additive in sapling production
The partially hydrated gel product of Example 4 was used in growing trials to raise two species of tree from seed.
The gel product was used in conjunction with a peat based potting compost supplemented with additional fertiliser. The gel product was included at 0.5, 1.0 and 2.0% wt/vol and growing medium without gel was used as control.
The compost contained the following additional fertiliser (per $m^3$):

2.0 kg "Osmocote" slow-release fertiliser (8—9 month formula)
0.2 kg trace elements
0.2 kg ferrous sulphate heptahydrate
3.0 kg magnesian limestone
0.5 kg single superphosphate.

"Japanese paper pots" (for sizes, see below) were filled with growing medium allowing some space for the swelling of the gel product on addition of water. For each medium mixture under test, 20 pots per tree species were prepared.
Alders (*Alnus glutinosa*) were sown at 1 seed per pot (pot size: 4.5 cm dia, 7.5 cm deep) and

7

covered with 3—5 mm of lime-free sand. Oaks (*Quercus petraea*) were sown at one chitted seed per pot (pot size: 4.5 cm dia, 15 cm deep) at a depth of approx. initially 2.5 cm. The pots were then thoroughly watered and covered with polyethylene sheet to prevent drying out. The sheet was removed at approximately 10% emergence.

Germination and emergence counts were made at 14 and 28 days. These are shown in Table 2.

TABLE 2
Numbers of emergent seedlings

| | 14 days | | | | 28 days | | | |
|---|---|---|---|---|---|---|---|---|
| Gel | 0 | 0.5 | 1.0 | 2.0% | 0 | 0.5 | 1.0 | 2.0% |
| *Alnus* | 9 | 15 | 17 | 18 | 14 | 15 | 20 | 19 |
| *Quercus* | 3 | 8 | 9 | 13 | 17 | 13 | 20 | 20 |

The plant heights were recorded after 9 weeks growth and are given in Table 3.

TABLE 3
Average plant heights at 9 weeks (in mm)

| Gel | 0 | 0.5 | 1.0 | 2.0% |
|---|---|---|---|---|
| Alnus | ** | 24.0 | 36.2 | 45.6 |
| Quercus | 50.2 | 59.7 | 76.6 | 94.8 |

** Although the original seedling emergence was high all the controls were subsequently lost through desiccation. The presence of gel product greatly reduced these losses, the numbers of surviving plants were 1, 9 and 12 respectively for the three treatments.

The plants were then potted on into 2.5 litre polyethylene containers using the same compost mixture and gel treatments except that the gel was swollen by the addition of approximately 20 times its original weight of aqueous nutrient solution *prior* to mixing with the compost. Plant heights were recorded at 19 weeks after the original sowing date.

TABLE 4
Average plant heights at 19 weeks (in cm)

| Gel: | 0 | 0.5 | 1.0 | 2.0% |
|---|---|---|---|---|
| *Alnus* | — | 53 | 44.1 | 59.3 |
| *Quercus* | 19 | 27.4 | 29.6 | 36.5 |

Example 8
Effect of incorporation of gel additives on growing media phase volumes

The gel product of Example 4 was added to a growing medium as detailed in Table 5. The mixture was placed in a 10 cm diameter plant pot and placed on capillary matting saturated with a standard concentration of an aqueous plant nutrient solution. When the contents of the pot had reached equilibrium the phase volumes of the constituents (air, water, solid) were calculated using absolute densities obtained using a helium-air pycnometer. The values are expressed as air:solid and water:solid ratios.

Percentages of gel product added are weight/volume, e.g. 1% represents 1 g additive in 100 mls medium.

8

# 0 072 213

### TABLE 5

| Medium | A/S | W/S |
|---|---|---|
| Peat based potting compost | 2.1 | 7.1 |
| $+\frac{1}{2}$% gel product | 2.5 | 7.4 |
| +1% gel product | 2.9 | 7.9 |
| +2% gel product | 3.6 | 8.7 |
| Compost tree bark | 3.6 | 5.5 |
| $+\frac{1}{2}$% gel product | 4.2 | 6.6 |
| +1% gel product | 4.5 | 6.8 |
| +2% gel product | 4.5 | 7.2 |

As can be seen from the Table 5, the addition of water absorbent polymer improves both the air and water holding properties of the growing media as reflected in their air:solid and water:solid ratios.

Example 9

Example 8 was repeated except that:

i) the pots were covered tightly with polyethylene sheet to prevent moisture loss from the surface of the growing medium.
ii) the gel additive was swollen by addition of approximately 20 times its own weight of an aqueous plant nutrient solution *prior* to mixing with the growing medium.

The results are shown in Table 6:

### TABLE 6

| Medium | A/S | W/S |
|---|---|---|
| Peat based potting compost | 5.0 | 8.6 |
| +1% gel product | 5.6 | 9.9 |
| Composted tree bark | 5.1 | 5.7 |
| +1% gel product | 5.4 | 6.2 |

The increase in air:solid and water:solid ratios show that the air and water holding properties of the growing media have been improved.

**Claims**

1. A particulate composition useful as a plant-growing media additive comprising partially hydrated, water-retentive gel particles, characterized in that the gel particles are capable of absorbing releasably at least 5 and preferably at least 10 times their own weight of water, are substantially water-insoluble and have a low deformability when fully hydrated, and which particles have been rendered free-flowing by having the outside surface modified with a finely particulate hydrophilic flow agent of the group consisting of kaolin, fuller's earth, talc, bentonite and aluminium silicate.

2. A composition according to claim 1, wherein the flow agent is kaolin or fuller's earth.

3. A composition according to either of the preceding claims, wherein the flow agent comprises at least about 3% but not more than about 20% by weight of the composition.

4. A composition according to any one of the preceding claims, wherein the gel particles consist of a cross-linked copolymer of acrylamide and (meth)acrylic acid salt.

5. A composition according to claim 4, wherein the molar ratio of acrylamide to (meth)acrylic acid salt in the copolymer is at least 70:30 but not greater than 95:5, and the copolymer is chemically cross-linked such that the proportion of water-soluble polymer is less than 30% by weight of the dry polymer material.

6. A process for the preparation of a particulate composition useful as a plant-growing media additive, in which process a partially hydrated mass of water-retentive gel, having a water content

9

**0 072 213**

greater than about 16%, preferably greater than 20%, but not greater than about 80% by weight, is subdivided into particles in the presence of a finely particulate hydrophilic flow agent of the group consisting of kaolin, fuller's earth, talc, bentonite and aluminium silicate.

7. A process according to claim 6, wherein the gel mass is rendered particulate by means of a comminution device having a shearing/cutting action.

8. A process according to any one of claims 6 and 7, in which the gel mass is produced by copolymerising an aqueous reactant mix containing acrylamide and (meth)acrylic acid salt.

9. A process according to any one of claims 6 to 8, in which a mixture of acrylamide and (meth)acrylic acid salt in a molar ratio of at least 70:30 but not greater than 95:5 is copolymerised in the presence of a cross-linking agent in an amount sufficient to ensure that less than 30% of the resulting polymeric composition (expressed by weight of the composition when dry) is water-soluble.

10. A process according to claim 9, wherein the cross-linking agent is N,N-methylene-bisacrylamide which is present in the mix in an amount of from 0.02 to 0.2% by weight of the total monomers.

**Revendications**

1. Composition particulaire utile comme additif pour les milieux de croissance des plantes comprenant des particules de gel partiellement hydratées rétentrices d'eau, caractérisée en ce que les particules de gel sont capables d'absorber réversiblement au moins 5 et de préférence au moins 10 fois leur propre poids d'eau, sont sensiblement insolubles dans l'eau et ont une faible déformabilité lorsqu'elles sont complètement hydratées, lesquelles particules ont été rendues meubles du fait que leur surface extérieure a été modifiée au moyen d'un agent de mobilité hydrophile finement particulaire de la classe consistant en le kaolin, la terre à foulon, le talc, la bentonite et le silicate d'aluminium.

2. Composition suivant la revendication 1, dans laquelle l'agent de mobilité est le kaolin ou la terre à foulon.

3. Composition suivant l'une quelconque des revendications précédentes, dans laquelle l'agent de mobilité forme au moins environ 3% mais pas plus d'environ 20% du poids de la composition.

4. Composition suivant l'une quelconque des revendications précédentes, dans laquelle les particules de gel consistent en un copolymère réticulé d'acrylamide et de sel d'acide (méth)acrylique.

5. Composition suivant la revendication 4, dans laquelle le rapport molaire de l'acrylamide au sel d'acide (méth)acrylique dans le copolymère est d'au moins 70:30 mais non supérieur à 95:5 et le copolymère est chimiquement réticulé de façon que la proportion de polymère soluble dans l'eau soit inférieure à 30% du poids du polymère sec.

6. Procédé de préparation d'une composition particulaire utile comme additif pour les milieux de croissance des plantes, dans lequel une masse partiellement hydratée de gel rétenteur d'eau, ayant une teneur en eau supérieure à environ 16%, de préférence supérieure à 20%, mais non supérieure à environ 80% en poids, est subdivisée en particules en présence d'un agent de mobilité hydrophile finement particulaire de la classe consistant en le kaolin, la terre à foulon, le talc, la bentonite et le silicate d'aluminium.

7. Procédé suivant la revendication 6, dans lequel la masse de gel est rendue particulaire au moyen d'un appareil de subdivision exerçant un effet de cisaillement/tranchage.

8. Procédé suivant la revendication 6 ou 7, dans lequel la masse de gel est produite par copolymérisation d'un mélange aqueux de réactants contenant de l'acrylamide et un sel d'acide (méth)acrylique.

9. Procédé suivant l'une quelconque des revendications 6 à 8, dans lequel un mélange d'acrylamide et de sel d'acide (méth)acrylique dans un rapport molaire d'au moins 70:30 mais non supérieur à 95:5 est copolymérisé en présence d'un agent de réticulation en une quantité suffisante pour assurer que moins de 30% de la composition polymère résultante (à exprimer en poids de la composition sèche) soient solubles dans l'eau.

10. Procédé suivant la revendication 9, dans lequel l'agent de réticulation est le N,N-méthylène-bisacrylamide qui est présent dans le mélange en une quantité de 0,02 à 0,2% en poids de l'ensemble des monomères.

**Patentansprüche**

1. Teilchenförmige Zusammensetzung, die als Zusatz für Pflanzenwachstumsmittel brauchbar ist und teilweise hydratisierte, wasserbeibehaltende Gelteilchen enthält, dadurch gekennzeichnet, daß die Gelteilchen wenigstens das 5-fache und vorzugsweise wenigstens das lo-fache ihres Eigengewichtes an Wasser in freisetzbarer oder abgebbarer Weise absorbieren können, im wesentlichen wasserunlöslich sind und im vollständig hydratisierten Zusatnd eine geringe Deformierbarkeit aufweisen, wobei die Teilchen durch Modifizierung der Außenoberfläche mit einem feinteiligen hydrophilen Fließmittel aus der Gruppe von Kaolin, Fuller-Erden, Talk, Bentonit und Aluminiumsilicat freifließend gemacht wurden.

2. Zusammensetzung nach Anspruch 1, dadurch gekennzeichnet, daß das Fließmittel Kaolin oder Fuller-Erden ist.

10

3. Zusammensetzung nach einem der vorhergehenden Ansprüche, dadurch gekennzeichnet, daß das Fließmittel wenigstens etwa 3%, jedoch nicht mehr als etwa 20 Gew.% der Zusammensetzung ausmacht.

4. Zusammensetzung nach einem der vorhergehenden Ansprüche, dadurch gekennzeichnet, daß die Gelteilchen aus einem vernetzten Copolymerisat von Acrylamid und (Meth)acrylsäuresalz bestehen.

5. Zusammensetzung nach Anspruch 4, dadurch gekennzeichnet, daß das molare Verhältnis von Acrylamid zu (Meth)acrylsäuresalz in dem Copolymerisat wenigstens 70:30 beträgt, jedoch nicht oberhalb 95:5 liegt, und das Copolymerisat chemisch so vernetzt ist, daß der Anteil an wasserlöslichem Polymerisat weniger als 30 Gew.% des Trockenpolymerisatmaterials beträgt.

6. Verfahren zur Herstellung einer teilchenförmigen Zusammensetzung, die als Zusatz für Pflanzenwachstumsmittel brauchbar ist, dadurch gekennzeichnet, daß eine teilweise-hydratisierte Masse eines wasserbeibehaltenden Gels mit einem Wassergehalt von oberhalb etwa 16%, vorzugsweise oberhalb 20%, jedoch nicht oberhalb etwa 80 Gew.%, in Gegenwart eines feinteiligen hydrophilen Fließmittels aus der Gruppe von Kaolin, Fuller-Erden, Talk, Bentonit und Aluminiumsilicat in Teilchen aufgeteilt wird.

7. Verfahren nach Anspruch 6, dadurch gekennzeichnet, daß die Gelmasse mit Hilfe einer Zerkleinerungseinrichtung mit einer Scher/Schneid-Wirkung teilchenförmig gemacht wird.

8. Verfahren nach einem der Ansprüche 6 und 7, dadurch gekennzeichnet, daß die Gelmasse durch Copolymerisieren einer wäßrigen Reaktionsteilnehmermischung, die Acrylamid und (Meth)acryl-säuresalz enthält, hergestellt wird.

9. Verfahren nach einem der Ansprüche 6 bis 8, dadurch gekennzeichnet, daß eine Mischung von Acrylamid und (Meth)acrylsäuresalz in einem molaren Verhältnis von wenigstens 70:30, jedoch nicht oberhalb von 95:5, in Gegenwart eines Vernetzungsmittels in einer ausreichenden Menge, um sicherzustellen, daß weniger als 30% der sich ergebenden polymeren Zusammensetzung (bezogen auf das Gewicht der Zusammensetzung in trockenem Zustand) wasserlöslich sind, copolymerisiert wird.

10. Verfahren nach Anspruch 9, dadurch gekennzeichnet, daß das Vernetzungsmittel N,N'-Methylen-bisacrylamid ist, das in der Mischung in einer Menge von 0,02 bis 0,2 Gew.% der gesamten Monomeren vorhanden ist.